# EUROPEAN PATENT APPLICATION

(11) **EP 4 546 868 A1**
(43) Date of publication of application: **30.04.2025**
(21) Application number: 23826709.0
(22) Date of filing: 06.02.2023
(51) Int. Cl.: H04W 36/28, H04W 16/32, H04W 36/04, H04W 36/36, H04W 72/0457, H04W 72/20, H04W 92/12

(54) **BASE STATION DEVICE, TERMINAL DEVICE, CONTROL METHOD, AND PROGRAM FOR EFFICIENT CONNECTION DESTINATION CHANGE PROCESSING**

(30) Priority: 21.06.2022 JP 2022099735
(71) Applicant: KDDI Corporation, Tokyo 163-8003 (JP)
(72) Inventor: LI, Yanwei, Tokyo 163-8003 (JP); TAKEDA, Hiroki, Tokyo 163-8003 (JP)
(74) Representative: Mathys & Squire
(86) International application number: PCT/JP2023/003752
(87) International publication number: WO 2023/248516

(57) **Abstract**

A base station device notifies a terminal device currently connected to the base station device of preconfiguration information for the terminal device to autonomously select and switch a cell serving as a connection destination. The preconfiguration information includes first information indicating combinations of a first cell that is a candidate for a primary cell serving as a handover destination and a second cell that is a candidate for a secondary cell in a case where the first cell is the primary cell, and second information indicating, for each cell included in the first information as the first cell or the second cell, a condition for connecting to the cell and a communication parameter to be used when connecting to the cell, and in a case where a cell that is the same in different combinations of the primary cell and the secondary cell indicated by the first information is present, only one communication parameter for the cell is included in the preconfiguration information as the second information.

## Description

### TECHNICAL FIELD

The present invention relates to techniques for improving the efficiency of connection destination change processing.

### BACKGROUND ART

In cellular communication systems, handover technology that switches the connection destination of a terminal device in response to the terminal device moving or the like is used to ensure communication continuity. The standard method for a handover is for a base station device to send an instruction message to the terminal device after the communication quality of the currently-connected radio link deteriorates at the terminal device and processing such as preparations for the handover on the core network side are subsequently started. However, this method requires time for the processing from when the communication quality actually deteriorates to when the handover instruction is sent, which can prolong the time for which communication is not possible or the communication quality is inadequate. In light of this situation, the 3rd Generation Partnership Project (3GPP (registered trademark)) has discussed a method of performing the processing such as preparations in advance and switching the connection destination cell without receiving an instruction message from the base station device when a predetermined condition is met in the terminal device (see Non-Patent Document 1). The predetermined condition includes, for example, when the radio quality of a neighboring cell becomes better than the radio quality of the currently-connected cell by at least a predetermined level, when the radio quality of the currently-connected cell has dropped below a predetermined value, or the like in the terminal device. According to this method, handover preparations are completed on the core network side before deterioration in the communication quality or the like that would prompt a handover occurs. This makes it possible to greatly shorten the time when communication is not possible or the communication quality is inadequate. Such a handover is called a "conditional handover" or "CHO".

Similarly, in multi-connectivity (MC) and the like, where a terminal device connects to multiple cells, processing such as preparation can be performed in advance, and when a predetermined condition is met in the terminal device, the terminal device can add or change a secondary cell without receiving an instruction message from the base station device. In the following, this conditional addition or changing of a secondary cell may be called "CPAC".

### CITATION LIST

### NON-PATENT LITERATURE

NPL 1: 3GPP TR38.874, V16.0.0, December 2018

### SUMMARY OF INVENTION

### TECHNICAL PROBLEM

A secondary cell can only be configured in combination with a primary cell. Therefore, when a CHO is performed, the secondary cell may also need to be changed. It may therefore also be necessary to perform preconfiguration for the combination of the primary cell and the secondary cell. However, specific preconfiguration methods for such a combination of a primary cell and a secondary cell have not yet been considered.

### SOLUTION TO PROBLEM

The present invention provides a technique for efficiently configuring a conditional cell change for a combination of a primary cell and a secondary cell.

A base station device according to one aspect of the present invention comprises notification means for notifying a terminal device currently connected to the base station device of preconfiguration information for the terminal device to autonomously select and switch a cell serving as a connection destination, wherein the preconfiguration information includes first information indicating combinations of a first cell that is a candidate for a primary cell serving as a handover destination and a second cell that is a candidate for a secondary cell in a case where the first cell is the primary cell, and second information indicating, for each cell included in the first information as the first cell or the second cell, a condition for connecting to the cell and a communication parameter to be used when connecting to the cell, and in a case where a cell that is the same in different combinations of the primary cell and the secondary cell indicated by the first information is present, only one communication parameter for the cell is included in the preconfiguration information as the second information.

A terminal device according to one aspect of the present invention comprises receiving means for receiving, from a base station device currently connected to the terminal device, preconfiguration information for the terminal device to autonomously select and switch a cell serving as a connection destination, wherein the preconfiguration information includes first information indicating combinations of a first cell that is a candidate for a primary cell serving as a handover destination and a second cell that is a candidate for a secondary cell in a case where the first cell is the primary cell, and second information indicating, for each cell included in the first information as the first cell or the second cell, a condition for connecting to the cell and a communication parameter to be used when connecting to the cell, and in a case where a cell that is the same in different combinations of the primary cell and the secondary cell indicated by the first information is present, only one communication parameter for the cell is included in the preconfiguration information as the second information.

### ADVANTAGEOUS EFFECTS OF INVENTION

According to the present invention, a conditional cell change for a combination of a primary cell and a secondary cell can be configured efficiently.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram illustrating an example of the configuration of a communication system.
FIG. 2 is a diagram illustrating an example of information of which a terminal device is notified for a conditional handover and a conditional secondary cell change or addition.
FIG. 3A is a diagram illustrating an example of information of which a terminal device is notified for a conditional handover and a conditional secondary cell change or addition.
FIG. 3B is a diagram illustrating an example of information of which a terminal device is notified for a conditional handover and a conditional secondary cell change or addition.
FIG. 4A is a diagram illustrating an example of information of which a terminal device is notified for a conditional handover and a conditional secondary cell change or addition.
FIG. 4B is a diagram illustrating an example of information of which a terminal device is notified for a conditional handover and a conditional secondary cell change or addition.
FIG. 5 is a diagram illustrating an example of the hardware configuration of a device.
FIG. 6 is a diagram illustrating an example of the functional configuration of a base station device.
FIG. 7 is a diagram illustrating an example of the functional configuration of a control device.
FIG. 8 is a diagram illustrating an example of the flow of processing.
FIG. 9 is a diagram illustrating an example of the flow of processing.
FIG. 10 is a diagram illustrating an example of the flow of processing.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

### System Configuration

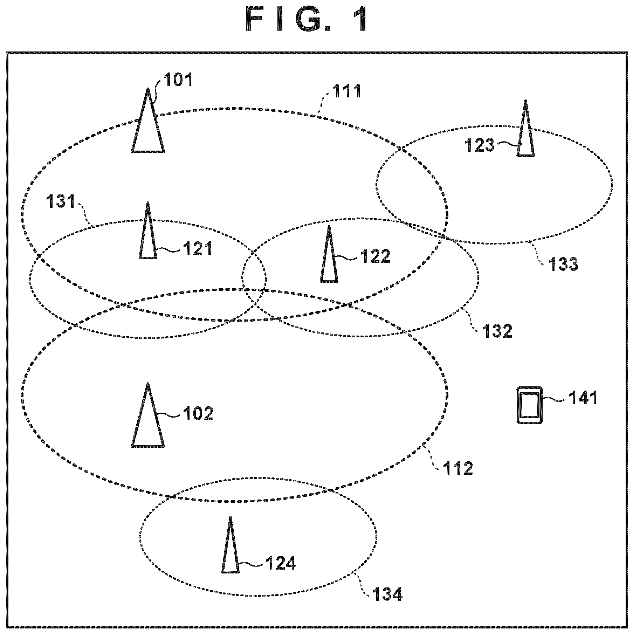

FIG. 1 illustrates an example of the configuration of a wireless communication system according to the present embodiment. This wireless communication system is, for example, a cellular communication system compliant with a cellular communication standard such as Long Term Evolution (LTE), 5th Generation (5G), or the like defined by the 3rd Generation Partnership Project (3GPP (registered trademark)). This is merely an example, however, and the following descriptions can be applied to any system in which a terminal device can continue to communicate while switching the connection destination cell.

In the wireless communication system illustrated in FIG. 1, a base station device provides a wireless communication service to a terminal device 141. Base station devices 101 and 102, which respectively provide cells 111 and 112 covering a relatively wide area, and base station devices 121 to 124, which respectively provide cells 131 to 134 covering a relatively narrow area, are illustrated as base station devices in the example in FIG. 1. The terminal device 141 is configured to be provided with the wireless communication service by connecting to at least one of these base station devices and sending and receiving wireless signals to and from the base station device that is the connection destination. The terminal device 141 connects to the base station device that configures the cell in which the terminal device 141 itself is located, and this may therefore be referred to as "connecting to a cell (provided by that base station device)" hereinafter.

The terminal device 141 can connect to two or more cells at the same time. Of these two or more cells, the cell that controls the communication of the terminal device 141 is called a "primary cell", and the cell to which the terminal device 141 connects under the control of the primary cell is called a "secondary cell". As an example, the terminal device 141 is assumed to connect to the cell 111 or the cell 112 as the primary cell, and to the cells 131 to 134 as the secondary cells.

In the present embodiment, preconfiguration is performed for the terminal device 141 to switch cells in response to, for example, the terminal device 141 establishing a connection with one of the cells, or in response to a certain degree of deterioration in the radio quality in the cell to which the terminal device 141 is connected. Here, a state in which preconfiguration has been performed is a state in which the settings of parameters and the like are complete for the terminal device 141 to connect to a cell that is a candidate to which the connection is to be changed, but the terminal device 141 has not actually switched the base station device that is the connection destination. Preconfiguration includes conditions for connecting to a cell in order to switch the connection from another cell, add a cell, and the like, and upon determining that those conditions are met, the terminal device 141 attempts to establish synchronization and connect to the new connection destination cell. Note that when switching the connection destination cell, the terminal device 141 performs processing for disconnecting from the originally-connected cell. Processing in which such preconfiguration is used for the terminal device 141 to autonomously switch the connection destination primary cell in accordance with conditions being met is called a "conditional handover" (CHO). Similarly, processing in which such preconfiguration is used for the terminal device 141 to autonomously switch or add a secondary cell in accordance with conditions being met is called a "conditional secondary cell addition or change" (CPAC).

When a CHO is performed, the base station device of the primary cell currently connected sends a handover request message (HANDOVER REQUEST), which includes information such as the parameters currently being used by the terminal device 141, to another base station device providing a cell serving as a handover destination primary cell candidate. The handover destination candidate base station device then sends, to the base station device of the primary cell to which the terminal device 141 is currently connected, a message responding to the stated message (HANDOVER REQUEST ACKNOWLEDGE), including information such as the communication parameters which should be used in the event that the terminal device 141 is handed over. Here, the handover destination candidate base station device holds the information such as the communication parameters that have been sent as preconfiguration information. The currently-connected base station device or the handover destination candidate base station device determines the conditions that should be met for the handover to the handover destination candidate base station device. The currently-connected base station device then notifies the terminal device 141 of the preconfiguration information, which includes the information on the communication parameters which should be used in the event of a handover to the handover destination candidate base station device, and the handover conditions. This notification can be made using a radio resource control (RRC) message, for example. In one example, the terminal device 141 is notified of the preconfiguration information using an RRC Reconfiguration message.

When a CPAC is performed, the base station device of the primary cell currently connected to sends a secondary cell addition request message (SgNB Addition Request) to another base station device providing a cell serving as a candidate for a secondary cell to be added or changed to. Note that this secondary cell addition request may be started, for example, in response to the base station device, which provides the secondary cell to which the terminal device 141 is currently connected, making a notification of a predetermined message (e.g., SgNB Change Required) to the base station device of the primary cell currently connected to. In this case, the base station device of the primary cell currently connected can send a secondary cell addition request as described above in response to the predetermined message being received. Then, another base station device providing a cell serving as a candidate for a secondary cell to be added or changed to (this may be called "another base station device that is a connection destination candidate" hereinafter) sends, to the base station device of the primary cell to which the terminal device 141 is currently connected, a message responding to the stated message (SgNB Addition Request Acknowledge), including information such as the communication parameters which should be used when the terminal device 141 adds or changes the secondary cell. Here, the other base station device that is a connection destination candidate holds the information such as the communication parameters that have been sent as preconfiguration information. The base station device of the primary cell currently connected to or the other base station device that is a connection destination candidate determines the conditions that should be met when adding or changing that secondary cell. The base station device of the primary cell currently connected then notifies the terminal device 141 of the preconfiguration information, which includes the information on the communication parameters that should be used when connecting to the other base station device that is a connection destination candidate and adding or changing a secondary cell, and the conditions for making such a connection. This notification can be made using a radio resource control (RRC) message, for example. In one example, the terminal device 141 is notified of the preconfiguration information using an RRC Reconfiguration message.

Upon receiving the preconfiguration information, the terminal device 141 holds that preconfiguration information, starts monitoring whether the conditions for a CHO or a CPAC are satisfied, and when the conditions are satisfied, performs processing such as terminating the connection with the currently-connected base station device, establishing synchronization with the base station device to be newly connected to, and the like to actually switch the connection destination. Note that there can be a plurality of connection destination candidate cells for the CHO or the CPAC. As such, the conditions and the communication parameters may be set separately for each of the one or more connection destination candidate cells for the CHO or the CPAC. In addition, if a single base station device configures a plurality of cells, the conditions and communication parameters may be set separately for the plurality of cells. The terminal device 141 monitors whether the conditions corresponding to each of the plurality of cells are satisfied, and changes the connection destination using the communication parameters corresponding to the conditions that are met. In this manner, the terminal device 141 can complete the CHO or the CPAC and continue to communicate even after the cell is changed.

The secondary cell is configured under the control of the primary cell. For this reason, when the primary cell is changed by a CHO, it is necessary to perform reconfiguration for the secondary cell. On the other hand, the configuration of the secondary cell associated with the primary cell from before the change is discarded after the CHO is performed, and it is therefore necessary to configure the secondary cell under the control of the primary cell after the change. Here, if the secondary cell is configured through a normal procedure (rather than a CPAC), the time until the configuration of the secondary cell is completed may be prolonged. Accordingly, the preconfiguration for the CPAC of the secondary cell can be combined with the preconfiguration for the CHO of the primary cell, and when the primary cell is changed through the CHO, the information of the preconfigured secondary cell associated with the post-change primary cell can be used to add or change the secondary cell through the CPAC. In this case, for example, a first base station device that provides a cell serving as a candidate for the primary cell can obtain the preconfiguration information for the CPAC from a second base station device that provides a cell that can be used as a secondary cell when the stated cell is used as the primary cell. Then, for each combination of primary cell and secondary cell when the cell provided by the first base station device itself is used as the primary cell, the first base station device can notify the base station device to which the terminal device 141 is currently connected of the conditions and communication parameters for the CHO and the conditions and communication parameters for the CPAC, and that base station device can then notify the terminal device 141 of the information in the notification.

For example, in FIG. 1, when the cell 111 is used as the primary cell, the cells that can be used as secondary cells are the cells 131 to 133. As such, for the combination of the cell 111 and the cell 131, the terminal device 141 may be notified of the conditions and communication parameters for a CHO of the cell 111 and the conditions and communication parameters for a CPAC of the cell 131. In addition, for the combination of the cell 111 and the cell 132, the terminal device 141 may be notified of the conditions and communication parameters for a CHO of the cell 111 and the conditions and communication parameters for a CPAC of the cell 132, and for the combination of the cell 111 and the cell 133, the terminal device 141 may be notified of the conditions and communication parameters for a CHO of the cell 111 and the conditions and communication parameters for a CPAC of the cell 133. Similarly, when the cell 112 is used as the primary cell, the terminal device 141 may be notified of the conditions and communication parameters for the CHO and the conditions and communication parameters for the CPAC for the combination of the cell 112 and the cell 131, the combination of the cell 112 and the cell 132, and the combination of the cell 112 and the cell 134. Although the example in FIG. 1 illustrates an example in which a cell having a geographical range overlapping with that of the primary cell candidate is taken as a secondary cell candidate, the configuration is not limited thereto. For example, depending on the combination of usable frequency bands, only a cell using a frequency band usable in parallel with the frequency band used in the primary cell may be taken as a secondary cell candidate. In other words, even if cells have overlapping geographical ranges, a cell using a frequency band that cannot be used in combination with the frequency band used in the primary cell may be excluded from the secondary cell candidates.

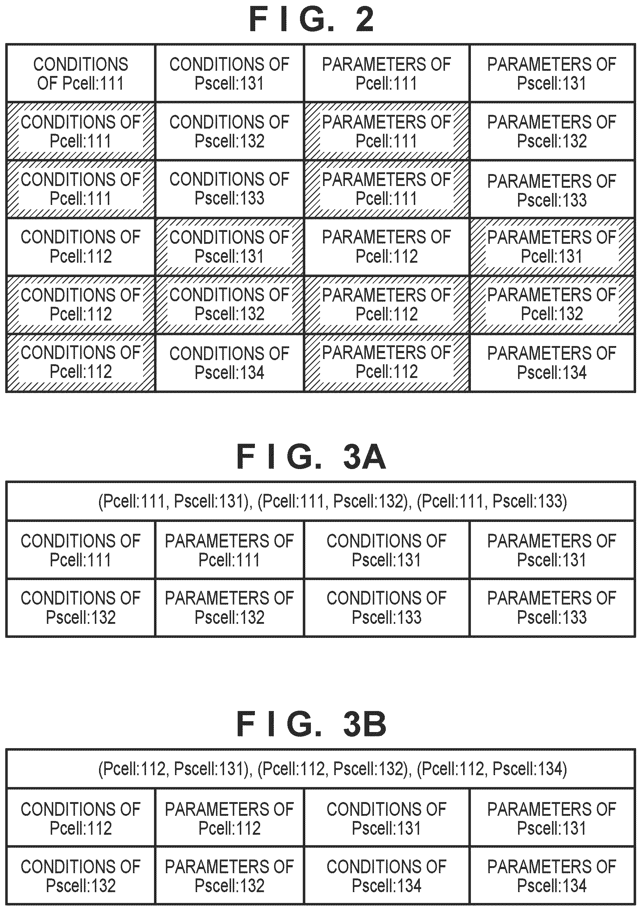

In such a notification, the conditions and communication parameters for the CHO with respect to the cell 111 or the cell 112 are notified for each of the secondary cell candidates. In this case, the terminal device 141 is notified of preconfiguration information such as that illustrated in FIG. 2, for example. However, the hatched parts are information that overlaps, which is assumed to be an inefficient form of information notification. Accordingly, the present embodiment provides a method that enables efficient preconfiguration by reducing the amount of information of which the terminal device 141 is notified, with respect to preconfiguration information pertaining to a combination of a CHO for the primary cell and a CPAC for the secondary cell.

In the present embodiment, a notification of the conditions, communication parameters, and the like pertaining to each cell is made only once, which avoids situations where the same information is repeatedly sent. For example, the terminal device 141 is notified of information such as that illustrated in FIG. 3A as the preconfiguration information when the cell 111 serves as the primary cell. In this information, the terminal device 141 is notified of information indicating the combination of the primary cell and the secondary cell, and information of the conditions and communication parameters for each cell. When the cell 111 serves as the primary cell, the cell 131, the cell 132, and the cell 133 can be set as secondary cells. Accordingly, the terminal device 141 is notified of the information of the cell 111 and the cell 131, the cell 111 and the cell 132, and the cell 111 and the cell 133 as the information of possible combinations. Because the cells included in these combinations are the cell 111 and the cells 131 to 133, a notification is made for the conditions and communication parameters for these cells. When a notification of information such as that illustrated in FIG. 2 is made, a total of three notifications are made for the communication parameters for the cell 111, once for each of the combinations. In contrast, with the information illustrated in FIG. 3A, a notification for the communication parameters for the cell 111 is made only once.

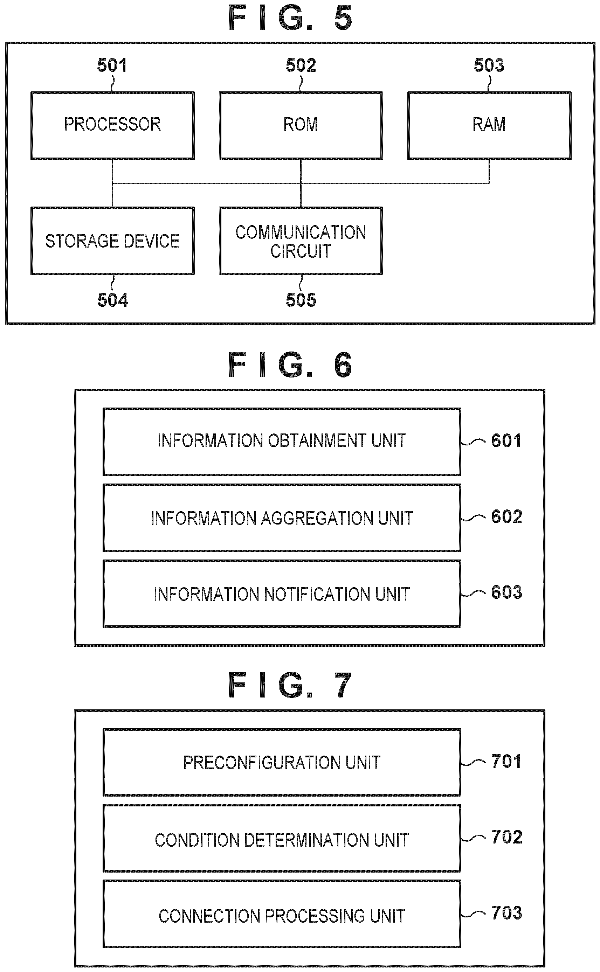

Here, as an example, it is assumed that two bytes are required for a notification of one combination of the primary cell and the secondary cell, one byte is required for a notification of the conditions for a single cell, and one kilobyte is required for a notification of the communication parameters for a single cell. When making a notification of information such as that illustrated in FIG. 2, a notification need not be made for the combination of the primary cell and the secondary cell, but a notification is made for the conditions and communication parameters for each the three combinations, namely, the cell 111 and the cell 131, the cell 111 and the cell 132, and the cell 111 and the cell 133. For this reason, a notification for the information on the conditions and the communication parameters is made for six cells each (the three combinations pertaining to two cells), resulting in 6 kilobytes + 6 bytes. On the other hand, with information such as that illustrated in FIG. 3A, 6 bytes of information for specifying three combinations, 4 bytes of information indicating the conditions for each cell, and 4 kilobytes of information indicating the communication parameters for each cell are used, resulting in a total of 4 kilobytes + 10 bytes. In this manner, the information notification method according to the present embodiment can greatly reduce the volume of the preconfiguration information. Similarly, the terminal device 141 is notified of information such as that illustrated in FIG. 3B as the preconfiguration information when the cell 111 serves as the primary cell.

Note that the first base station device that provides the primary cell to which the terminal device 141 is currently connected may obtain information such as that illustrated in FIGS. 3A and 3B from the second base station device that provides the cell that is a candidate for the primary cell to be the connection destination through the CHO, and may transfer the content thereof to the terminal device 141. In this case, the second base station device sends a message requesting the information on the conditions and communication parameters for performing a CPAC (e.g., a SgNB Addition Request) to a third base station device that provides a cell which can be used as a secondary cell when the cell provided by the second base station device itself functions as the primary cell. Then, the second base station device can receive a message in response to the request message (e.g., a SgNB Addition Request Acknowledge), and obtain information, included in the response message, on the conditions and communication parameters used when connecting to the secondary cell provided by the third base station device. Then, the second base station device aggregates the information on the candidate secondary cell obtained from the third base station device and the information of the candidate primary cell provided by the second base station device itself, and notifies the first base station device of the aggregated information. For example, the base station device 101 that forms the cell 111 obtains information on the connection conditions and communication parameters for serving as a secondary cell candidate from the base station device 121, the base station device 122, and the base station device 123 that form the cell 131, the cell 132, and the cell 133, respectively. The base station device 101 can then generate information such as that illustrated in FIG. 3A as the preconfiguration information based on the obtained information, and notify the base station device providing the primary cell to which the terminal device 141 is currently connected of that information. Similarly, the base station device 102 that forms the cell 112 can obtain information on the connection conditions and communication parameters for serving as a secondary cell candidate from the base station device 121, the base station device 122, and the base station device 124 that form the cell 131, the cell 132, and the cell 134, respectively, generate information such as that illustrated in FIG. 3B as the preconfiguration information, and notify the base station device providing the primary cell to which the terminal device 141 is currently connected of that information.

Additionally, the first base station device providing the primary cell to which the terminal device 141 is currently connected may obtain only information about a cell that can be used as a secondary cell from the second base station device providing a cell serving as a primary cell candidate resulting from a CHO. In this case, the first base station device may send and receive a message similar to that used in the secondary cell addition or change described above to the third base station device providing a cell that can be used as a secondary cell, and obtain the connection conditions and communication parameters for when that third base station device is used as a secondary cell directly from the third base station device. In other words, in the second base station device that provides a cell serving as a primary cell candidate, the information on the third base station device that provides a cell serving as a secondary cell candidate may be aggregated, and the first base station device may be notified of the aggregated information, or the first base station device may obtain the information directly from the second base station device and the third base station device.

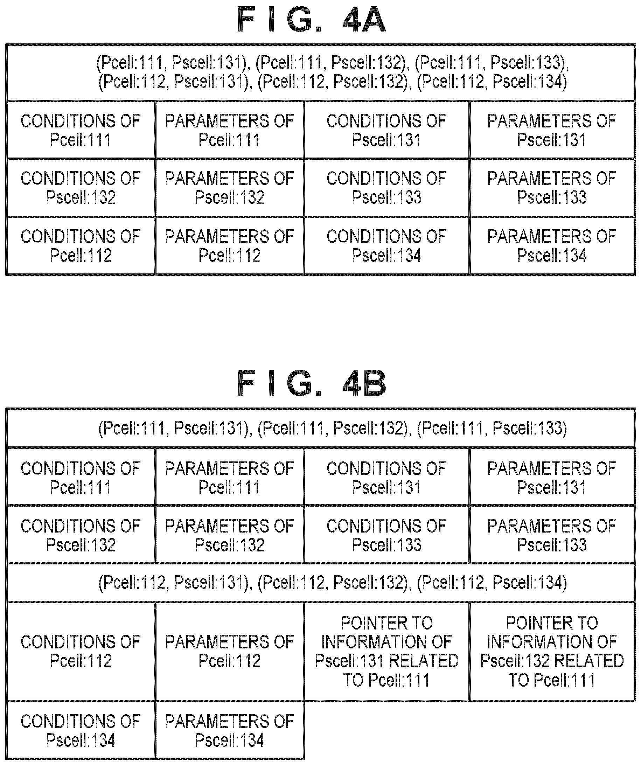

Note that when the information illustrated in FIG. 3A and the information illustrated in FIG. 3B should be sent together to the terminal device 141, the terminal device 141 may be notified of the information illustrated in FIG. 4A, which is an aggregate thereof, as the preconfiguration information. In other words, in FIGS. 3A and 3B, the conditions and communication parameters for the cells 131 and 132 overlap. As such, the base station device providing the primary cell to which the terminal device 141 is currently connected can aggregate the information of the cell combinations, further generate preconfiguration information including only one of the pieces of overlapping information on the conditions and communication parameters, and notify the terminal device 141 of that information. The base station device providing the primary cell to which the terminal device 141 is currently connected may also concatenate the information illustrated in FIGS. 3A and 3B, for example, and replace the information of the conditions and communication parameters in any of the concatenated information with a reference (pointer) to the same conditions and communication parameters in other information. For example, as illustrated in FIG. 4B, the information for the cell 131 and the cell 132 when the primary cell is the cell 112 may be replaced with pointers to the information for the cell 131 and the cell 132 when the primary cell is the cell 111. Accordingly, the information of the conditions and communication parameters is replaced with a pointer that provides a sufficient amount of information at a much smaller size, the size of the preconfiguration information can be significantly suppressed.

The foregoing describes an example in which the connection conditions and communication parameters of the cell 131 and the cell 132 are the same when the cell 111 is the primary cell and the cell 112 is the primary cell, for example. However, this is merely an example, and connection conditions and communication parameters that differ from one another may be used instead. In this case, the configuration may be such that the common parts are omitted and notifications for only different parts are made separately. In one example, when the connection conditions of the secondary cell differ for each primary cell used in combination therewith, the connection conditions are not omitted, and only the parts corresponding to the overlapping communication parameters are omitted, which prevents notifications for the same information from being made multiple times. In addition, in one example, predetermined information such as the connection conditions may not be omitted regardless of whether the information overlaps.

Upon obtaining the information as described above, the terminal device 141 measures the radio quality for the primary cell candidates, and when the radio quality meets the connection conditions for any candidate, starts a CHO. In addition, if the connection conditions for any of the secondary cell candidates are met at that time, the terminal device 141 starts a CPAC for that secondary cell. The terminal device 141 executes a random access procedure (RACH processing) for the cell to be connected to in the CHO and the CPAC, and performs communication using the communication parameters included in the preconfiguration information after the RACH processing is complete. If the terminal device 141 successfully connects to the primary cell but fails to connect to the secondary cell, for example, the terminal device 141 can attempt to connect to a candidate secondary cell that has been notified as being in a combination with the primary cell. However, if the terminal device 141 successfully connects to a secondary cell but fails to connect to the primary cell, the terminal device 141 attempts to connect to another primary cell candidate, but that primary cell candidate may be a cell that cannot be used in combination with the secondary cell to which the terminal device 141 has successfully connected. In this case, in the CHO to the primary cell candidate, it becomes necessary for the terminal device 141 to disconnect from the secondary cell to which the connection has been successfully made, and after the CHO is complete, it is necessary for the terminal device 141 to attempt to establish a connection with any of the secondary cell candidates again. Therefore, when entering such a state, the terminal device 141 may attempt to connect through a CHO with preference given to a primary cell candidate that can be used in combination with the secondary cell to the terminal device 141 has successfully connected. For example, the terminal device 141 can add a predetermined offset to the measured radio quality or a threshold thereof for the cell to be prioritized, making it easy to select that cell as the target of the handover. The terminal device 141 may also measure the radio quality with priority given to the cell to be prioritized. Note that the terminal device 141 may avoid attempting to establish a connection for a primary cell candidate that cannot be used in combination with a secondary cell with which a connection has been made successfully. In addition, the terminal device 141 may be permitted to attempt to establish a connection when the radio quality is sufficiently higher than that of another primary cell candidate, even if the other primary cell is a primary cell candidate that cannot be used in combination with the secondary cell with which a connection has been made successfully. In such a case, when attempting to establish a connection with the primary cell candidate, the terminal device 141 can terminate the connection with the secondary cell to which the connection has been made successfully.

As described above, when the CHO to the primary cell and the CPAC to the secondary cell are configured at the same time, if the radio quality of any of the primary cell candidates meets the connection conditions, and if the connection conditions for any of the secondary cell candidates are met, the terminal device 141 connects to the primary cell candidate that meets the connection conditions, and to the secondary cell candidate that is associated with that primary cell and meets the connection conditions. In one example, the terminal device 141 can perform the CHO and the CPAC when the radio quality of the primary cell candidate is better than (at least a certain offset value of) the radio quality of the primary cell currently connected, and the radio quality of the secondary cell candidate is better than (at least a certain offset value of) the radio quality of the secondary cell currently connected. Note that an event for performing such a CHO and a CPAC may be newly defined. This event may be called "event X" here for the sake of convenience. In this case, the primary cell may notify the terminal device 141 of this event X (along with information such as the preconfiguration information, for example) as a condition for performing the CHO and the CPAC, for example. In another example, the terminal device 141 can perform the CHO and the CPAC when both (i) the radio quality of the primary cell currently connected and the radio quality of the secondary cell currently connected are both below a first predetermined value and (ii) the radio quality of the primary cell candidate and the radio quality of the secondary cell candidate are both above a second predetermined value. Note that an event for performing such a CHO and a CPAC may be newly defined. This event may be called "event Y" here for the sake of convenience. Note that the first predetermined value for the radio quality of the primary cell currently connected may differ from the first predetermined value for the radio quality of the secondary cell currently connected. Likewise, the second predetermined value for the radio quality of the primary cell candidate may differ from the second predetermined value for the radio quality of the secondary cell candidate. In this case, the primary cell may notify the terminal device 141 of this event Y (along with information such as the preconfiguration information, for example) as a condition for performing the CHO and the CPAC, for example. Conventionally, an event in which the radio quality of a candidate for a connection destination cell (a primary cell or a secondary cell) is better than the radio quality of the currently-connected cell (the primary cell or the secondary cell) by at least a certain offset value has been defined as an event A3. Furthermore, conventionally, an event in which the radio quality of a currently-connected cell is below a first predetermined value and the radio quality of a candidate for a connection destination cell is above a second predetermined value has been defined as an event A5. Here, the terminal device 141 may perform the CHO and the CPAC when the conditions of the event A3 are met for the primary cell and the conditions of the event A5 are met for the secondary cell. Additionally, the terminal device 141 may perform the CHO and the CPAC when the conditions of the event A5 are met for the primary cell and the conditions of the event A3 are met for the secondary cell.

For example, when the conditions of the foregoing event A3 or event A5 with respect to the primary cell are met, the terminal device 141 may change the connection destination to the primary cell candidate while maintaining the conditions and preconfiguration information for the secondary cell candidate associated with that primary cell candidate. After the primary cell is changed, the terminal device 141 continuously determines whether the conditions for the CPAC of the secondary candidate (e.g., the event A3 or the event A5) are met based on results of measuring the radio quality, and the CPAC can be performed when the conditions are determined to be met. The terminal device 141 can then perform the CPAC based on information pertaining to the secondary cell candidate being maintained.

In addition, if the radio quality of any primary cell candidate satisfies the connection conditions (e.g., the event A3 or the event A5), the terminal device 141 may perform a CHO and a CPAC at the same time, even if the radio quality of the secondary cell candidate does not meet any of the connection conditions. In this case, the terminal device 141 may select, for example, the cell having the best radio quality from among the secondary cell candidates associated with the primary cell candidate to which the connection is to be changed, and determine that cell as the connection destination of the secondary cell through the CPAC. Note that of the secondary cell candidates associated with the primary cell candidate to which the connection is to be changed, a candidate to be connected when a CPAC is performed in a state where the connection conditions are not met may be specified, and the terminal device 141 may connect to that specified candidate cell. In addition, the terminal device 141 may determine a secondary cell candidate for which a radio quality exceeding a radio quality threshold lower than that of the connection condition is obtained as the secondary cell serving as the connection destination in the CPAC. Note that if a plurality of primary cell candidates meet the connection conditions and none of the secondary cell candidates associated therewith meet the connection conditions, the terminal device 141 may select the cell, among the secondary cell candidates associated with each of the primary cell candidates, that has the best radio quality, and perform a CHO with the primary cell associated with that cell as the connection destination. For example, assume that both a first primary cell candidate and a second primary cell candidate meet the conditions for a CHO. Here, assume that a first secondary cell candidate is associated with the first primary cell candidate, and a second secondary cell candidate is associated with the second primary cell candidate. At this time, if the radio quality of the first secondary cell candidate is higher than the radio quality of the second secondary cell candidate, the terminal device 141 may determine to perform a CHO to the first primary cell and a CPAC to the first secondary cell. In this manner, even if a CHO is performed in a state where the conditions for a CPAC of the secondary cell have not been met, the state can be assumed to be one in which the secondary cell can be used after the primary cell has been changed. As a result, high-volume data communication using the secondary cell can be performed immediately after the primary cell is changed through the CHO.

In addition, if the radio quality of any of the secondary cell candidates meets the connection conditions (e.g., the event A3 or the event A5), the terminal device 141 may change the secondary cell through a CPAC. In this case, the terminal device 141 can maintain the conditions and the preconfiguration information pertaining to the primary cell candidate associated with the post-change secondary cell. The terminal device 141 may then determine whether to perform a CHO based on the maintained information of the conditions pertaining to the primary cell candidate, and if the conditions under which the CHO is to be performed are met, may perform the CHO to establish a connection with that primary cell candidate.

In addition, if the radio quality of any secondary cell candidate satisfies the connection conditions (e.g., the event A3 or the event A5), the terminal device 141 may perform a CHO and a CPAC at the same time, even if the radio quality of the primary cell candidate does not meet any of the connection conditions. In this case, the terminal device 141 may select, for example, the cell having the best radio quality from among the primary cell candidates associated with the secondary cell candidate to which the connection is to be changed, and determine that cell as the connection destination of the primary cell through the CHO. Note that of the primary cell candidates associated with the secondary cell candidate to which the connection is to be changed, a candidate to be connected when a CHO is performed in a state where the connection conditions are not met may be specified, and the terminal device 141 may connect to that specified candidate cell. In addition, the terminal device 141 may determine a primary cell candidate for which a radio quality exceeding a radio quality threshold lower than that of the connection condition is obtained as the primary cell serving as the connection destination in the CHO. Note that if a plurality of secondary cell candidates meet the connection conditions and none of the primary cell candidates associated therewith meet the connection conditions, the terminal device 141 may select the cell, among the primary cell candidates associated with each of the secondary cell candidates, that has the best radio quality, and perform a CPAC with the secondary cell associated with that cell as the connection destination. In this manner, even if a CPAC is performed in a state where the conditions for a CHO of the primary cell have not been met, the state can be assumed to be one in which the primary cell can be used after the secondary cell has been changed.

In addition, when performing a CHO to a given primary cell candidate, the terminal device 141 may preferentially establish a connection with a secondary cell candidate, among the secondary cell candidates that can be used in combination with that primary cell, that can also be used in combination with another primary cell candidate. For example, in the example in FIG. 1, when connecting to the cell 111, the terminal device 141 can attempt to establish a connection with the secondary cell candidate cells 131 to 133 through a CPAC. At this time, the cell 133 cannot be used in combination with the cell 112, while the cell 131 and the cell 132 can be used in combination with the cell 112. Accordingly, the terminal device 141 may attempt to connect to the cell 131 or the cell 132 as secondary cell candidates with priority over the cell 133. Through this, if the connection to the primary cell candidate fails and only the connection to the secondary cell candidate is successful, that connection can be maintained while also attempting to connect to another primary cell candidate. If the connection to the other primary cell candidate is successful, there is no need to reconfigure the secondary cell.

### (Device Configuration)

FIG. 5 illustrates an example of the hardware configurations of the base station device and the terminal device. In one example, the base station device and the terminal device include a processor 501, a ROM 502, a RAM 503, a storage device 504, and a communication circuit 505. The processor 501 is a computer configured including at least one processing circuit such as a general-purpose CPU (central processing unit), an ASIC (Application Specific Integrated Circuit), or the like, and executes overall processing of the device, the individual processes described above, and the like by reading out programs stored in the ROM 502, the storage device 504, and the like and executing the programs. The ROM 502 is a read-only memory that stores programs, information such as various parameters, and the like pertaining to the processing executed by the base station device and the terminal device. The RAM 503 functions as a workspace when the processor 501 executes programs, and is a random access memory that stores temporary information. The storage device 504 is constituted by, for example, a removable external storage device or the like. The communication circuit 505 is constituted by a circuit for LTE or 5G wireless communication, for example. Although one communication circuit 505 is illustrated in FIG. 5, the base station device and the terminal device can each have a plurality of communication circuits. For example, the base station device and the terminal device can have an antenna shared by wireless communication circuits for LTE and 5G. Note that the base station device and the terminal device may have separate antennas for LTE and 5G. The base station device can further have a wired communication circuit used when communicating with other base station devices, nodes of the core network, and the like. The terminal device may have a communication circuit for another wireless communication system, such as a wireless LAN. Note also that the base station device and the terminal device may have separate communication circuits 505 for each of a plurality of frequency bands that can be used, or may have a common communication circuit 505 for at least some of those frequency bands.

FIG. 6 illustrates an example of the functional configuration of the base station device. The base station device has, as functions, an information obtainment unit 601, an information aggregation unit 602, and an information notification unit 603, for example. Note that only the functions specifically related to the present embodiment are illustrated in FIG. 6, and various other functions that the base station device can have are not illustrated. For example, the base station device naturally has other functions generally provided in LTE and 5G base station devices. The function blocks in FIG. 6 are illustrated schematically, and the function blocks may be realized as an integrated unit, or may be further subdivided. Additionally, each of the functions in FIG. 6 may be realized, for example, by the processor 501 executing a program stored in the ROM 502 or the storage device 504, or by a processor inside the communication circuit 505 executing predetermined software. With respect to the processing performed by each function unit, the processing described above will not be described in detail here, and only an overview of the general functions thereof will be given.

First, a case where the base station device is a base station device providing a primary cell to which the terminal device is currently connected, i.e., a case where the base station device is the handover origin, will be described.

The information obtainment unit 601 obtains the information on the connection conditions and communication parameters for a CHO from a first other base station device providing the primary cell serving as a handover destination candidate. At this time, the information obtainment unit 601 can obtain, from the first other base station device, the information on the connection conditions and communication parameters for a CPAC, for a cell that can be used as a secondary cell in combination when the cell provided by the first other base station device is used as the primary cell, for example. For example, the information obtainment unit 601 sends a HANDOVER REQUEST message, including information on the communication parameters currently used by the terminal device, to the first other base station device. The information obtainment unit 601 then receives a HANDOVER REQUEST ACKNOWLEDGE message, including information on the connection conditions and communication parameters for the CHO and the CPAC, from the first other base station device. In this case, the information obtainment unit 601 can obtain information such as that illustrated in FIGS. 3A and 3B, for example. The information obtainment unit 601 may also obtain information that has not been aggregated, such as that illustrated in FIG. 2, for example.

Note that the information obtainment unit 601 may obtain, from the first other base station device, the information on the connection conditions and communication parameters of the CHO, and information specifying a cell that can be used as a secondary cell in combination when the cell provided by the first other base station device is used as the primary cell. In this case, the information obtainment unit 601 may request the information on the connection conditions and communication parameters for the CPAC from a second other base station device providing that cell, and obtain the information on the connection conditions and communication parameters as a response to that request. In one example, the request and the response in this case can be made using a SgNB Addition Request and a SgNB Addition Request Acknowledge, respectively. In other words, the information on the connection conditions and communication parameters for the secondary cell candidate may be obtained via the first other base station device that provides the cell serving as a primary cell candidate, or may be obtained directly from the second other base station device that provides the cell serving as a secondary cell candidate.

The information aggregation unit 602 aggregates the information obtained by the information obtainment unit 601, and performs processing such as deleting overlapping communication parameters, replacement with pointers, and the like. When non-aggregated information such as that illustrated in FIG. 2 is obtained, the information aggregation unit 602 may generate information such as that illustrated in FIGS. 3A and 3B, in which the information is aggregated for each primary cell, or may generate information such as FIGS. 4A and 4B, in which the information is aggregated for each of a plurality of primary cells, for example. The information notification unit 603 notifies the terminal device of the aggregated information on the connection conditions and communication parameters for the CHO and CPAC, generated by the information aggregation unit 602.

Next, a case where the base station device is a base station device providing a primary cell to which the terminal device is currently connected, i.e., a case where the base station device is the handover origin, will be described.

If the base station device itself is providing a cell serving as a primary cell candidate, for example, the information obtainment unit 601 obtains the information on the connection conditions and communication parameters for the CPAC for cells serving as secondary cell candidates that can be used in combination with the stated cell. The information obtainment unit 601 can collect the information of the connection conditions and communication parameters for the CPAC, for example, in response to a request for the information of the connection conditions and communication parameters for the CHO from the base station device providing the primary cell to which the terminal device is currently connected. Upon receiving a HANDOVER REQUEST including information such as the communication parameters currently used by the terminal device from the first other base station device providing the primary cell to which the terminal device is currently connected, the information obtainment unit 601 sends a SgNB Addition Request including information corresponding to the communication parameters to the second other base station device providing the cell serving as a secondary cell candidate. The information obtainment unit 601 can then receive, from the second other base station device, a SgNB Addition Request Acknowledge including the information of the connection conditions and communication parameters.

The information aggregation unit 602 aggregates the information obtained by the information obtainment unit 601. For example, the information aggregation unit 602 of the base station device 101 generates information such as that illustrated in FIG. 3A. The information notification unit 603 notifies the base station device providing the primary cell to which the terminal device is currently connected of the information generated by the information aggregation unit 602. Note that the information obtained by the information obtainment unit 601 may be provided as-is to the base station device providing the primary cell to which the terminal device is currently connected, and in that case, the information aggregation unit 602 may be omitted.

Note that the base station device that provides the cell serving as a secondary cell candidate is configured to notify other base station devices which have requested the information of the connection conditions and communication parameters for the CPAC, of that information.

In one example, each base station device can have some or all of the capabilities described above. In other words, the base station device may have all or only some of the functions as a base station device providing the primary cell to which the terminal device is currently connected, the functions as a base station device providing the cell serving as a primary cell candidate, and the functions as a base station device providing the cell serving as a secondary cell candidate.

FIG. 7 illustrates an example of the functional configuration of the terminal device. The terminal device has, as functions, a preconfiguration unit 701, a condition determination unit 702, and a connection processing unit 703, for example. Note that only the functions specifically related to the present embodiment are illustrated in FIG. 7, and various other functions that the terminal device can have are not illustrated. For example, the terminal device naturally has other functions generally provided in LTE and 5G base station devices. The function blocks in FIG. 7 are illustrated schematically, and the function blocks may be realized as an integrated unit, or may be further subdivided. Additionally, each of the functions in FIG. 7 may be realized, for example, by the processor 501 executing a program stored in the ROM 502 or the storage device 504, or by a processor inside the communication circuit 505 executing predetermined software. With respect to the processing performed by each function unit, the processing described above will not be described in detail here, and only an overview of the general functions thereof will be given.

The preconfiguration unit 701 obtains the information of the connection conditions and communication parameters for the CHO and CPAC from the base station device providing the primary cell currently connected to, and performs configurations the CHO and CPAC. The preconfiguration unit 701 receives an RRC Reconfiguration message, for example, and obtains information such as that illustrated in FIGS. 3A and 3B, or information such as that illustrated in FIGS. 4A and 4B, which is included in the message. The preconfiguration unit 701 then performs the preconfiguration of the CHO for the primary cell candidate, and performs the preconfiguration of the CPAC for the cells serving as secondary cell candidates that can be used in combination with the primary cell candidate. The condition determination unit 702 determines whether the connection conditions are met for each of the primary cell and secondary cell candidates set by the preconfiguration unit 701. The connection processing unit 703 performs connection processing for the cell for which the condition determination unit 702 has determined that the connection conditions are met, using the communication parameters preconfigured for that cell. Note that if, for example, the connection processing unit 703 successfully connects to the secondary cell but fails to connect to the primary cell, the condition determination unit 702 may adjust the connection conditions so as to attempt a connection to another primary cell candidate that can be configured with the secondary cell for which the connection has succeeded. In addition, the condition determination unit 702 may adjust the connection conditions so as to preferentially connect to a secondary cell candidate that can be used in combination with a plurality of primary cell candidates, for example.

### (Flow of Processing)

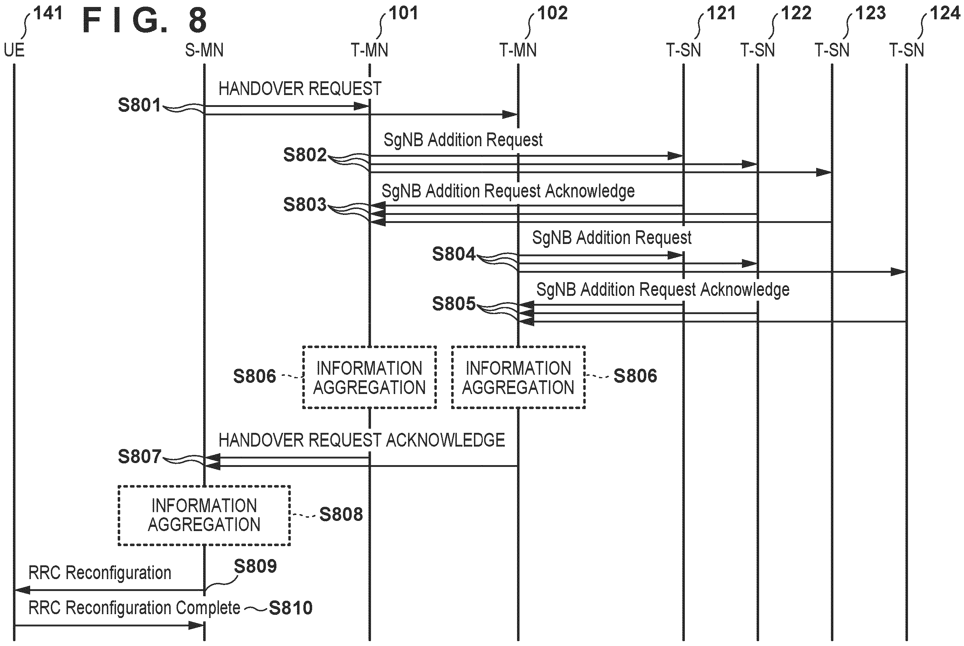

An example of the flow of processing will be described next. FIG. 8 illustrates a sequence for providing information for a CHO and a CPAC to the terminal device 141 from a base station device (S-MN) providing the primary cell to which the terminal device is currently connected. Note that "S-MN" is an acronym for "Source Master Node". Here, the base station device providing the primary cell candidate is called a Target Master Node (T-MN). In the example in FIG. 1, the base station device 101 and the base station device 102 are T-MNs. A base station device providing a cell serving as a secondary cell candidate is called a Target Secondary Node (T-SN). In the example in FIG. 1, the base station devices 121 to 124 are T-SNs.

First, the S-MN transmits a HANDOVER REQUEST by selecting a base station device, from the base station devices that provide cells serving as primary cell candidates in the vicinity, for which the reception quality of signals sent from those base station devices is at least a predetermined value, as the T-MN (S801). Note that the HANDOVER REQUEST includes information that enables, for example, a determination as to whether the communication service can be provided at a communication performance corresponding to the communication parameters currently being used by the terminal device 141. Additionally, the HANDOVER REQUEST here may include information requesting that the terminal device 141 provide information on a secondary cell candidate capable of communicating at a communication performance corresponding to the communication parameters in the secondary cell to which the terminal device 141 is currently connected. Note that the information on the measured value of the radio quality in the terminal device 141 for each secondary cell candidate may be provided. Upon receiving this information, the T-MN sends a SgNB Addition Request to the T-SN that provides a cell that can be used as a secondary cell when the cell provided by the T-MN itself is used as the primary cell (S802, S804). The SgNB Addition Request here includes, for example, information enabling the requested communication performance to be identified or the like. If able to provide the communication service at the requested communication performance, the T-SN sends information indicating that the connection is permitted and a SgNB Addition Request Acknowledge including the connection conditions and communication parameters for the CPAC to the T-MN (S803, S805). Upon receiving the connection conditions and communication parameters for the CPAC from the T-SN, the T-MN sends, to the S-MN, a HANDOVER REQUEST ACKNOWLEDGE including that information and the information on the connection conditions and communication parameters in the CHO to the T-MN itself (S807). At this time, the T-MN may aggregate the information as illustrated in FIGS. 3A and 3B (S806), and then send the information to the S-MN.

Upon receiving the information of the CHO and the CPAC from the T-MN, the S-MN notifies the terminal device 141 of an RRC Reconfiguration message including that information (S809), the terminal device 141 returns an RRC Reconfiguration Complete message to the S-MN (S810), which completes the preconfiguration. Note that the S-MN may aggregate the information received from the T-MN (S808), and then provide that information to the terminal device 141. The preconfiguration for the CHO and the CPAC is completed in the terminal device 141 in the manner described above.

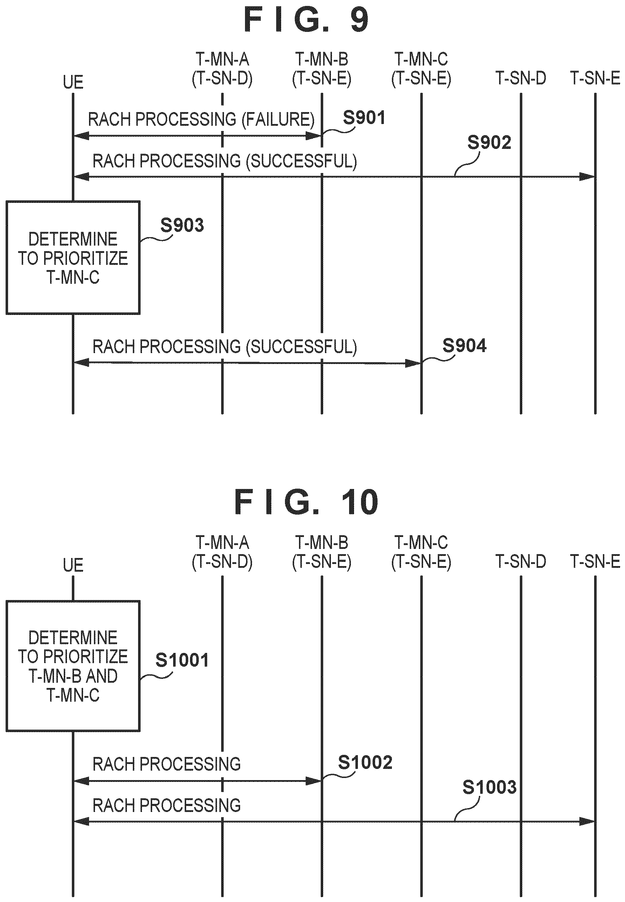

Next, a flow of processing performed when a terminal device changes a connection destination will be described with reference to FIGS. 9 and 10. Note that in these examples, T-MN-A to T-MN-C are assumed to be the base station devices providing the primary cell candidates. The primary cell provided by the T-MN-A is assumed to also be usable in combination with a cell provided as a secondary cell by a T-SN-D, and the primary cells provided by the T-MN-B and the T-MN-C are also assumed to be usable in combination with a cell provided as a secondary cell by a T-SN-E. Here, it is assumed that the terminal device has attempted to establish a connection with the T-MN-B through a CHO, further attempted to establish a connection with the T-SN-E through a CPAC, has failed to connect to the T-MN-B, and has succeeded in connecting to the T-SN-E (S901, S902). In this case, the terminal device determines to connect with priority to the T-MN-C, which is capable of providing a primary cell that can be used in combination with the secondary cell provided by the T-SN-E, in order to maintain the connection with the T-SN-E (S903). The terminal device then attempts to establish a connection with the T-MN-C while maintaining the connection with the T-SN-E (S904). This eliminates the need to connect to the secondary cell again, and thus the connection can be established efficiently.

The example in FIG. 10 is an example in which before performing the handover, the terminal device selects a T-MN which provides a primary cell that can be used with a common secondary cell as the T-MN to be connected to with priority. In this example, two T-MNs, namely the T-MN-B and the T-MN-C, provide a primary cell that can use the cell provided by the T-SN-E as a secondary cell. On the other hand, only one T-MN, namely the T-MN-A, provides a primary cell that can use the cell provided by the T-SN-D as a secondary cell. Accordingly, the terminal device determines that the secondary cell associated with the greater number of primary cells is a cell provided by the T-SN-E, and determines that the T-MN-B and the T-MN-C, which provide the primary cells that can be used with the secondary cell, are to be connected to with priority (S1001). Then, based on this determination, the terminal device performs a CHO to the base station device, among the T-MN-B and the T-MN-C, that has a better radio quality, and performs a CPAC to the T-SN-E, for example (S1002, S1003).

In the present embodiment, the CHO and the CPAC can be efficiently performed in this manner. This makes it possible to contribute to Goal 9 of the United Nations-led Sustainable Development Goals (SDGs), which is to "build resilient infrastructure, promote inclusive and sustainable industrialization, and foster innovation".

The invention is not limited to the foregoing embodiments, and various variations/changes are possible within the spirit of the invention.

This application claims priority from Japanese Patent Application No. 2022-099735, filed June 21, 2022, which is hereby incorporated by reference herein.

## Claims

1. A base station device comprising:
notification means for notifying a terminal device currently connected to the base station device of preconfiguration information for the terminal device to autonomously select and switch a cell serving as a connection destination,
wherein the preconfiguration information includes first information indicating combinations of a first cell that is a candidate for a primary cell serving as a handover destination and a second cell that is a candidate for a secondary cell in a case where the first cell is the primary cell, and second information indicating, for each cell included in the first information as the first cell or the second cell, a condition for connecting to the cell and a communication parameter to be used when connecting to the cell, and
in a case where a cell that is the same in different combinations of the primary cell and the secondary cell indicated by the first information is present, only one communication parameter for the cell is included in the preconfiguration information as the second information.

2. The base station device according to claim 1,
wherein in a case where the first information indicates a combination of each of a plurality of the second cells serving as candidates for a secondary cell with one of the first cells serving as a candidate for a primary cell, the second information indicates the communication parameter of the one of the first cells only once.

3. The base station device according to claim 1,
wherein in a case where the first information indicates a combination of each of a plurality of the first cells serving as candidates for a primary cell with one of the second cells serving as a candidate for a secondary cell, the second information indicates the communication parameter of the one of the second cells only once.

4. The base station device according to claim 3,
wherein the preconfiguration information includes a plurality of pieces of third information, each including the first information and the second information, for each of the plurality of the first cells,
the second information included in the third information for a specific cell among the plurality of the first cells indicates the communication parameter of the one of the second cells, and
the second information included in the third information for an other cell, among the plurality of the first cells, that is different from the specific cell includes, as information pertaining to the communication parameter of the one of the second cells, information referencing the communication parameter of the one of the second cells included in the third information for the specific cell, and does not include the communication parameter.

5. The base station device according to claim 1, further comprising:
receiving means for receiving the first information and the second information for the first cell from a first other base station device that provides the first cell.

6. The base station device according to claim 5,
wherein the receiving means receives the first information and the second information for the first cell provided by the first other base station device by sending a HANDOVER REQUEST message to the first other base station device.

7. The base station device according to claim 5, further comprising:
generating means for generating the preconfiguration information by aggregating the first information and the second information obtained from a plurality of the first other base station devices.

8. The base station device according to claim 1, further comprising:
providing means for providing, to a second other base station device currently connected to an other terminal device that takes a cell provided by the base station device as a candidate for a primary cell, information indicating a combination of the cell provided by the base station device and an other cell that is a candidate for a secondary cell in a case where the cell is the primary cell, and information indicating a condition for connecting to the cell and the other cell and a communication parameter to be used when connecting to the cell and the other cell.

9. The base station device according to claim 8, further comprising:
requesting means for making a request, to a third other base station device that provides the other cell, the condition for connecting to the other cell and the communication parameter to be used when connecting to the other cell.

10. The base station device according to claim 9,
wherein the requesting means makes the request by sending a SgNB Addition Request message.

11. The base station device according to claim 1,
wherein the notification means notifies the terminal device of the preconfiguration information using a radio resource control (RRC) message.

12. A terminal device comprising:
receiving means for receiving, from a base station device currently connected to the terminal device, preconfiguration information for the terminal device to autonomously select and switch a cell serving as a connection destination,
wherein the preconfiguration information includes first information indicating combinations of a first cell that is a candidate for a primary cell serving as a handover destination and a second cell that is a candidate for a secondary cell in a case where the first cell is the primary cell, and second information indicating, for each cell included in the first information as the first cell or the second cell, a condition for connecting to the cell and a communication parameter to be used when connecting to the cell, and
in a case where a cell that is the same in different combinations of the primary cell and the secondary cell indicated by the first information is present, only one communication parameter for the cell is included in the preconfiguration information as the second information.

13. The terminal device according to claim 12,
wherein in a case where the first information indicates a combination of each of a plurality of the second cells serving as candidates for a secondary cell with one of the first cells serving as a candidate for a primary cell, the second information indicates the communication parameter of the one of the first cells only once.

14. The terminal device according to claim 12,
wherein in a case where the first information indicates a combination of each of a plurality of the first cells serving as candidates for a primary cell with one of the second cells serving as a candidate for a secondary cell, the second information indicates the communication parameter of the one of the second cells only once.

15. The terminal device according to claim 14,
wherein the preconfiguration information includes a plurality of pieces of third information, each including the first information and the second information, for each of the plurality of the first cells,
the second information included in the third information for a specific cell among the plurality of the first cells indicates the communication parameter of the one of the second cells, and
the second information included in the third information for an other cell, among the plurality of the first cells, that is different from the specific cell includes, as information pertaining to the communication parameter of the one of the second cells, information referencing the communication parameter of the one of the second cells included in the third information for the specific cell, and does not include the communication parameter.

16. The terminal device according to claim 12,
wherein the receiving means receives the preconfiguration information from the base station device through a radio resource control (RRC) message.

17. A control method performed by a base station device, the control method comprising:
notifying a terminal device currently connected to the base station device of preconfiguration information for the terminal device to autonomously select and switch a cell serving as a connection destination,
wherein the preconfiguration information includes first information indicating combinations of a first cell that is a candidate for a primary cell serving as a handover destination and a second cell that is a candidate for a secondary cell in a case where the first cell is the primary cell, and second information indicating, for each cell included in the first information as the first cell or the second cell, a condition for connecting to the cell and a communication parameter to be used when connecting to the cell, and
in a case where a cell that is the same in different combinations of the primary cell and the secondary cell indicated by the first information is present, only one communication parameter for the cell is included in the preconfiguration information as the second information.

18. A control method performed by a terminal device, the control method comprising:
receiving, from a base station device currently connected to the terminal device, preconfiguration information for the terminal device to autonomously select and switch a cell serving as a connection destination,
wherein the preconfiguration information includes first information indicating combinations of a first cell that is a candidate for a primary cell serving as a handover destination and a second cell that is a candidate for a secondary cell in a case where the first cell is the primary cell, and second information indicating, for each cell included in the first information as the first cell or the second cell, a condition for connecting to the cell and a communication parameter to be used when connecting to the cell, and
in a case where a cell that is the same in different combinations of the primary cell and the secondary cell indicated by the first information is present, only one communication parameter for the cell is included in the preconfiguration information as the second information.

19. A program for causing a computer provided in a base station device to notify a terminal device currently connected to the base station device of preconfiguration information for the terminal device to autonomously select and switch a cell serving as a connection destination,
wherein the preconfiguration information includes first information indicating combinations of a first cell that is a candidate for a primary cell serving as a handover destination and a second cell that is a candidate for a secondary cell in a case where the first cell is the primary cell, and second information indicating, for each cell included in the first information as the first cell or the second cell, a condition for connecting to the cell and a communication parameter to be used when connecting to the cell, and
in a case where a cell that is the same in different combinations of the primary cell and the secondary cell indicated by the first information is present, only one communication parameter for the cell is included in the preconfiguration information as the second information.

20. A program for causing a computer provided in a terminal device to receive, from a base station device currently connected to the terminal device, preconfiguration information for the terminal device to autonomously select and switch a cell serving as a connection destination,
wherein the preconfiguration information includes first information indicating combinations of a first cell that is a candidate for a primary cell serving as a handover destination and a second cell that is a candidate for a secondary cell in a case where the first cell is the primary cell, and second information indicating, for each cell included in the first information as the first cell or the second cell, a condition for connecting to the cell and a communication parameter to be used when connecting to the cell, and
in a case where a cell that is the same in different combinations of the primary cell and the secondary cell indicated by the first information is present, only one communication parameter for the cell is included in the preconfiguration information as the second information.
